# EUROPÄISCHE PATENTANMELDUNG

(11) **EP 2 012 051 A1**
(43) Veröffentlichungstag der Anmeldung: **07.01.2009**
(21) Anmeldenummer: 07013005.9
(22) Anmeldetag: 03.07.2007
(51) Int. Cl.: F16L 21/02, F16J 15/00

(54) **Dichtungsanordnung zur Reduzierung der Gaspermeation**

(71) Anmelder: Carl Freudenberg KG, 69469 Weinheim (DE)
(72) Erfinder: Gerland, Armin, 79685 Häg-Ehrsberg (DE); Kleedörfer, Ralf, 79730 Murg (DE); Weiss, Rainer, 69469 Weinheim (DE); Cheng, Xiaojin, 22529 Hamburg (DE); Masuch, Christoph, 79733 Görwihl (DE)

(57) **Zusammenfassung**

Dichtungsanordnung zur Abdichtung von zwei miteinander zu verbindenden Bauteilen (10, 20), die wenigstens ein erstes Verbindungselement (11) und ein zweites Verbindungselement (21) aufweisen, die ineinandergreifend und unter Bildung von wenigstens zwei radial gestaffelten, ringförmigen Hohlräumen (12, 13; 22, 23) gestaltet sind. In jedem ringiörmigem Hohlraum ist eine Dichtung (1, 2, 3, 4) aus Elastomer angeordnet. Es wird ein besonders langer Diffusionsweg erzielt.

## Beschreibung

### Technisches Gebiet

Die Erfindung bezieht sich auf eine Dichtungsanordnung umfassend zwei miteinander zu verbindende Bauteile, die eine erste Raumseite gegen eine zweite Raumseite abgrenzen, und Elastomerdichtmittel zur gasdichten Abdichtung der beiden Raumseiten gegeneinander.

### Stand der Technik

Derartige Dichtungsanordnungen werden üblicherweise mit Radialdichtungen oder Axialdichtungen ausgeführt, häufig als O-Ringe. Um eine möglichst gute Dichtwirkung zu erzielen, wird eine hohe Verpressung der Dichtringe benötigt. Dichtringe aus verhältnismäßig weichem Elastomermaterial lassen sich gewöhnlich mit geringerer Montagekraft montieren gegenüber Elastomerdichtringen hoher Härte, unterliegen jedoch der Gefahr der Spaltextrusion und explosiven Dekompression. Zur Erzielung einer hohen Verpressung müssen deshalb verhältnismäßig harte Elastomerdichtringe verwendet werden. Diese unterliegen jedoch der Gefahr der Absplitterungen bei der Montage, was zur Gefahr von Leckagen führt.

Um die Abdichtwirkung (geringe Gaspermeation) zu erhöhen, ist es bekannt, mehrere Radialdichtungen in axialer Richtung aneinanderzureihen. Dies macht jedoch einen großen Bauraum in axialer Richtung erforderlich, was die Einsatzmöglichkeiten dieser Dichtungsanordnung einschränkt. Auch besteht das Risiko bei aneinandergereihten Dichtungen, dass Abscherung oder Anhaftung winziger Elastomerpartikel der einen Dichtung eine Kontamination an einer anderen Dichtung verursacht und damit eine erhöhte Leckagegefahr an dieser Dichtung entsteht.

### Darstellung der Erfindung

Der Erfindung liegt die Aufgabe zugrunde, eine Dichtungsanordnung zu schaffen, die eine geringe Permeation von Gasen durch die Dichtungsanordnung ermöglicht. Trotz sehr guter Abdichtwirkung soll der axiale Bauraum der Dichtungsanordnung klein gehalten werden können. Die Dichtungsanordnung soll mit mäßigen Montagekräften zusammengebaut werden können. Die Dichtungsanordnung soll den jeweiligen Medien, Drücken oder Temperaturen der voneinander abzudichtenden Raumseiten angepasst werden können.

Die Erfindung wird durch die Lehre des Anspruchs 1 definiert und durch die weiteren abhängigen Ansprüche ausgestaltet und weiterentwickelt.

Im Einzelnen weisen die miteinander zu verbindenden Bauteile ineinandergreifende Verbindungselemente auf, zwischen denen radial gestaffelte, ringförmige Hohlräume verbleiben, die zur Aufnahme jeweiliger Dichtungen dienen. Somit gibt es zumindest zwei Radialdichtungen, die parallel zueinander und zur Achsrichtung der Verbindungselemente der Bauteile verlaufen. Die Permeationsstrecke der Dichtung setzt sich aus der Summe der axialen Längen der einzelnen Dichtungen der Dichtungsanordnung zusammen, wobei die Baulänge der Dichtungsanordnung die axiale Länge einer einzelnen Dichtung nicht sonderlich übersteigt. Indem die einzelnen Dichtungen in der Dichtungsanordnung versetzt eingebaut sind, erfolgt ihre Zusammenpressung bei der in axialer Richtung erfolgenden Montage der Dichtungsanordnung nacheinander, was das Auftreten von verhältnismäßig geringen Montagekräften begünstigt. Das Dichtungsmaterial (Elastomer) kann dem Einsatzzweck der Dichtungsanordnung angepasst werden. Einer Raumseite hoher Temperatur wird temperaturfestes Dichtungsmaterial zugeordnet, gegen eine Raumseite mit aggressiven Medien wird aggressionsfestes Dichtungsmaterial gesetzt, und bei hohen Drücken auf einer Raumseite wird entsprechend druckfestes Dichtungsmaterial verwendet. Zur Raumseite geringer Belastung wird besonders diffusionsfestes Dichtungsmaterial benutzt.

### Kurzbeschreibung der Zeichnung

Ausführungsbeispiele der Erfindung werden anhand der Zeichnung beschrieben. Dabei zeigt:
Fig. 1 eine erste Ausführungsform einer Dichtungsanordnung im Längsschnitt,
Fig. 2 eine zweite Ausführungsform,
Fig. 3 eine dritte Ausführungsform,
Fig. 4 eine vierte Ausführungsform und
Fig. 5 eine mögliche Einzelheit.

### Ausführung der Erfindung

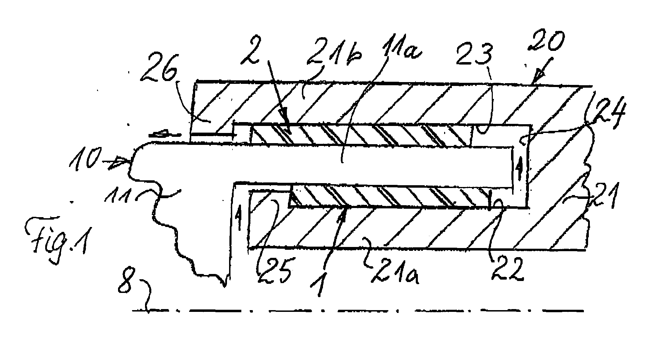

In Fig. 1 sind zwei miteinander zu verbindende Bauteile 10, 20 als Enden von Rohren angedeutet, die das Rohrinnere als erste Raumseite vom Rohräußeren als zweite Raumseite voneinander trennen. Die eingezeichnete Rohrachse 8 ist nicht maßstäblich, wie die ganze Zeichnung schematisch zu verstehen ist. Die Rohrenden sind als erstes Verbindungselement 11 bzw. zweites Verbindungselement 21 ausgebildet. Dabei weist das zweite Verbindungselement 21 zwei ringförmige Vorsprünge oder Schenkel 21 a und 21 b auf, die einen sich axial erstreckenden, ringförmigen Aufnahmeraum 24 umgrenzen. Das Verbindungselement 11 weist einen sich axial erstreckenden, ringförmigen Vorsprung 11a auf, der in den Aufnahmeraum 24 hinein reicht. Die Schenkel 21a, 21 b weisen jeweils einen zum ersten Verbindungselement 11 hin reichenden Flansch 25 bzw. 26 auf, die axial gegeneinander versetzt sind. Innerhalb des ringförmigen Aufnahmeraums 24 wird so ein radial innerer, ringförmiger Hohlraum 22 und ein radial äußerer, ringförmiger Hohlraum 23 gebildet, die zur Aufnahme einer ersten Dichtung 1 und einer zweiten Dichtung 2 dienen. Die Dichtungen 1, 2 sind versetzt angeordnet, wie dargestellt, und sind in Achsrichtung wesentlich länger als in Radialrichtung gestaltet. Auch können die Dichtungen 1, 2 unterschiedlich breit sein (Abmessung in Achsrichtung). Der Diffusionsweg zwischen der ersten Raumseite und der zweiten Raumseite ist durch Pfeile angedeutet. Diffundierendes Gas muss lange Wegstrecken durch die Dichtungen 1 und 2 zurücklegen, wobei die Dichtungen 1 und 2 jeweils einen schmalen Querschnitt darbieten. Mit den langen Permeationswegen und den geringen Permeationsquerschnitten ist das dargestellte Verbindungssystem bezüglich Permeation gewissermaßen optimiert.

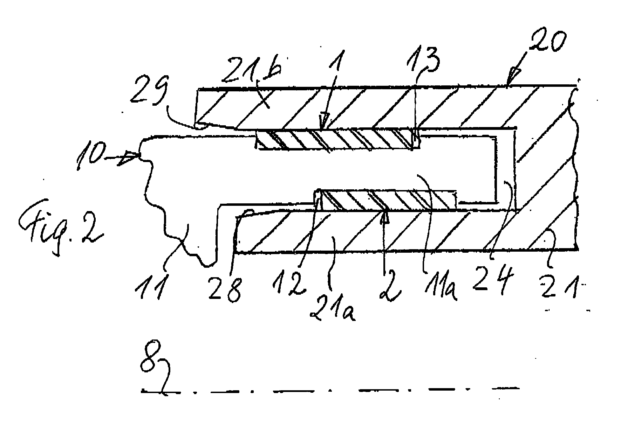

Fig. 2 stellt eine Abwandlung des Verbindungssystems nach Fig. 1 dar. Hier weist das erste Verbindungselement 11 eine innere, ringförmige Aussparung 12 und eine äußere, ringförmige Aussparung 13 auf, die zur Aufnahme der Dichtungen 1 bzw. 2 dienen. Der ringförmige Aufnahmeraum 24 des zweiten Verbindungselements 21 ist nur knapp größer als die Dicke des sich axial erstreckenden, ringförmigen Vorsprungs 11 a des Verbindungselements 11. Zum erleichterten Zusammenbau weisen die Schenkel 21 a und 21 b Einlaufschrägen 28 bzw. 29 auf, die gegeneinander versetzt sind. Die Versetzung der Dichtungen 1, 2 und der Abschrägungen 28, 29 ist so getroffen, dass die Einlaufschrägen nacheinander an den Dichtungen zum Eingriff kommen, um die Montagekraft beim Zusammenschieben der Verbindungselemente 11, 21 klein zu halten. (Die Spitzenwerte der Haftreibungskraft werden zeitlich nacheinander erreicht und überlagem sich nicht gleichzeitig.)

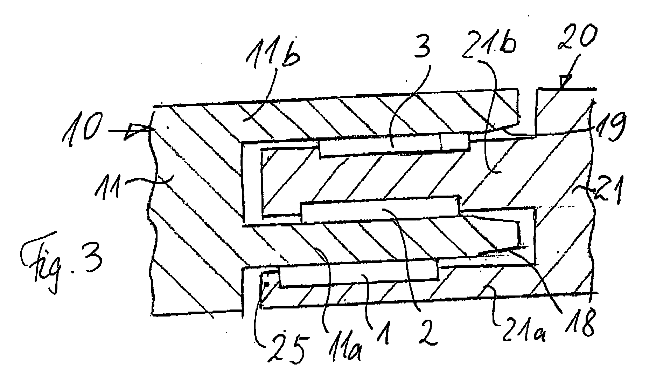

Fig. 3 stellt eine Mehrfachanordnung von radial gestaffelten Dichtungen 1, 2 und 3 dar. Das erste Verbindungselement 11 weist zwei ringförmige Vorsprünge oder Schenkel 11 a und 11 b auf, desgleichen das zweite Verbindungselement 21, nämlich die Schenkel 21 a und 21 b, an deren Enden Flansche 25 und 26 sitzen. Die Enden der Schenkel oder ringförmigen Vorsprünge 11a und 11b weisen Einführungsschrägen 18 bzw. 19 auf. In dieser Ausführungsform der Fig. 3 durchläuft der Diffusionsweg die drei Dichtungen 1, 2, 3 hintereinander, während die axiale Baulänge der Dichtungsanordnung nur wenig größer als die axiale Länge einer Dichtung ist.

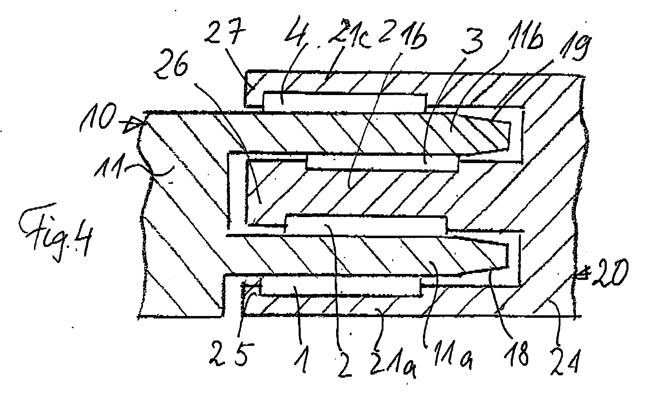

Fig. 4 zeigt eine Vierfachanordnung von Dichtungen 1, 2, 3, 4. Das erste Verbindungselement 11 weist zwei Schenkel oder ringförmige Vorsprünge 11a, 11 b auf, während das zweite Verbindungselement 21 drei Schenkel oder ringförmige Vorsprünge 21 a, 21 b und 21 c besitzt, an deren Enden wiederum Flansche 25, 26 bzw, 27 angebracht sind. Die Schenkel oder Vorsprünge 11a, 11 b sind mit Einführungsschrägen 18, 19 versehen. Diese Dichtungsanordnung zeigt wiederum einen nochmals verlängerten Diffusionsweg.

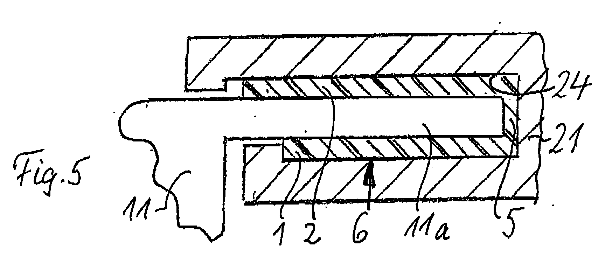

Fig. 5 zeigt eine Abwandlung in der Gestaltung der Dichtungen. Zwei benachbarte Dichtungen 1, 2 können nämlich als Dichtungsabschnitte einer einteilig hergestellten Dichtung 6 aufgefasst werden, d. h. es ist ein Verbindungsabschnitt 5 zwischen den beiden Dichtungsabschnitten 1 und 2 vorgesehen. Die Doppeldichtung 6 kann über einen Schenkel oder Vorsprung 11 a des ersten Verbindungselements 11 gestülpt werden, es ist aber auch möglich, die Doppeldichtung in dem Aufnahmeraum 24 des zweiten Verbindungselements 21 einzulegen und den Vorsprung 11a des ersten Verbindungselements 11 in den Raum zwischen den beiden Dichtungsabschnitten 1, 2 der Doppeldichtung 6 bei der Montage der Dichtungsanordnung hineinzudrücken.

Die neue Dichtungsanordnung lässt sich unterschiedlichen Anforderungen anpassen. Wenn beispielsweise die erste Raumseite ein Medium mit hoher Temperatur führt, so wird die Dichtung 1 aus temperaturfestem Elastomermaterial hergestellt, während die Dichtung 2 (oder die weiter außen liegenden Dichtungen) aus gegenüber Gaspermeabilität-optimiertem Material gefertigt wird. Im Falle der Mehrfachanordnung der Dichtungen kann mit unterschiedlichen Pressdrücken in unterschiedlichen Aufnahmeräumen der Dichtungen gearbeitet werden. Dabei kann es zweckmäßig sein, Dichtungen mit unterschiedlichen Shore-Härten zu wählen. Dichtungen, die größeren Drücken unterliegen, können mit höheren Shore-Härten ausgestattet sein.

Die neue Dichtungsanordnung ermöglicht es, die einzelnen Dichtungen geometrisch unabhängig zu gestalten, insbesondere was die Abmessung in Achsrichtung ("Breite") und quer zur Achsrichtung ("Schnurstärke") betrifft.

Bei hohem Druckgefälle zwischen den beiden Raumseiten der Dichtungsanordnung unterliegt gewöhnlich die der Druckseite benachbarte Dichtung einem höheren Druck und damit der Gefahr der Spaltextrusion. Die erfindungsgemäße Dichtungsanordnung ermöglicht es, diese druckgefährdete Dichtung mit höherer Shore-Härte gegenüber den übrigen Dichtungen auszuwählen. Man kann auf diese Weise die Montagekräfte gegenüber dem Fall reduzieren, dass sämtliche Dichtungen mit hoher Shore-Härte ausgebildet sind.

## Patentansprüche

1. Dichtungsanordnung, umfassend zwei miteinander zu verbindende Bauteile (10, 20), die eine erste Raumseite gegen eine zweite Raumseite abgrenzen, und Dichtmittel zur gasdichten Abdichtung der beiden Raumseiten gegeneinander,
**dadurch gekenenzeichnet**, dass die Bauteile (10, 20) wenigstens ein erstes Verbindungselement (11) und ein zweites Verbindungselement (21) aufweisen, die entlang einer Achse (8) ineinandergreifend und unter Bildung von wenigstens zwei radial gestaffelten, ringförmigen Hohlräumen (12, 13; 22, 23) gestaltet sind, unddass in jedem ringförmigem Hohlraum eine Dichtung (1, 2, 3, 4) aus Elastomer angeordnet ist.

2. Dichtungsanordnung nach Anspruch 1, **dadurch gekennzeichnet, dass** die in einem jeweiligen ringförmigen Hohlraum angeordnete Dichtung (1, 2, 3, 4) eine Ausdehnung in Achsrichtung aufweist, die gegenüber der Ausdehnung quer zur Achsrichtung groß ist.

3. Dichtungsanordnung nach Anspruch 1 oder 2; **dadurch gekennzeichnet, dass** die Dichtungen (1, 2) zweier benachbarter, radial gestaffelter Hohlräume (22, 23) durch einen radial äußeren und einen radial inneren Abschnitt einer Doppeldichtung (6) gebildet werden, die einen die Dichtungsabschnitte überbrückenden Verbindungsabschnitt (5) aufweist.

4. Dichtungsanordnung nach einem der Ansprüche 1 bis 3, **dadurch gekennzeichnet, dass** das erste Verbindungselement (11) wenigstens einen sich axial erstreckenden, ringförmigen Vorsprung (11a) und das zweite Verbindungselement (21) wenigstens einen sich axial erstreckenden, ringförmigen Aufnahmeraum (24) aufweisen.

5. Dichtungsanordnung nach Anspruch 4, **dadurch gekennzeichnet, dass** der ringförmige Vorsprung (11 a) mit wenigstens einer ringförmigen Aussparung (12, 13) zur Aufnahme einer jeweiligen Dichtung (1, 2) versehen ist.

6. Dichtungsanordnung nach Anspruch 4, **dadurch gekennzeichnet, dass** der ringförmige Aufnahmeraum (24) durch wenigstens einen sich radial erstreckenden Flansch (25, 26) begrenzt wird.

7. Dichtungsanordnung nach einem der Ansprüche 1 bis 6, **dadurch gekennzeichnet, dass** die zwischen den Verbindungselementen (11, 21) gebildeten, radial gestaffelten, ringförmigen Hohlräume (12, 13; 22, 23) axial gegeneinander versetzt sind.

8. Dichtungsanordnung nach einem der Ansprüche 1 bis 7, **dadurch gekennzeichnet, dass** am ersten Verbindungselement (11) und/oder am zweiten Verbindungselement (21) Einführungsschrägen (28, 29) vorgesehen sind.

9. Dichtungsanordnung nach einem der Ansprüche 1 bis 8,
**dadurch gekennzeichnet, dass** die Dichtungen (1, 2, 3, 4) unterschiedliche geometrische Gestaltungen, insbesondere hinsichtlich ihrer Länge, aufweisen.

10. Dichtungsanordnung nach einem der Ansprüche 1 bis 9, **dadurch gekennzeichnet, dass** die Dichtungen (1, 2, 3, 4) unterschiedliche Basiselastomere aufweisen.

11. Dichtungsanordnung nach einem der Ansprüche 1 bis 10, **dadurch gekennzeichnet, dass** die Dichtungen (1, 2, 3, 4) unterschiedliche Shore-Härten aufweisen.

12. Dichtungsanordnung nach einem der Ansprüche 1 bis 11, **dadurch gekennzeichnet, dass** die Dichtungen (1, 2, 3, 4) mit unterschiedlichen Verpressungen in ihren jeweiligen ringförmigen Hohlräumen (12, 13; 22, 23) untergebracht sind.

13. Dichtungsanordnung nach einem der Ansprüche 1 bis 12, **gekennzeichnet durch** eine Mehrfachanordnung von radial gestaffelten Dichtungen (1, 2, 3, 4).

## Geänderte Patentansprüche

### Geänderte Patentansprüche gemäss Regel 137(2) EPÜ.

**1.** Dichtungsanordnung, umfassend
zwei miteinander zu verbindende Bauteile (10, 20), die eine erste Raumseite gegen eine zweite Raumseite abgrenzen, und
Dichtmittel zur gasdichten Abdichtung der beiden Raumseiten gegeneinander,
**dadurch gekennzeichnet,**
**dass** die Bauteile (10, 20) wenigstens ein erstes Verbindungselement (11) und ein zweites Verbindungselement (21) aufweisen, die entlang einer Achse (8) ineinander greifend und unter Bildung von wenigstens zwei radial gestaffelten, ringförmigen Hohlräumen (12, 13; 22, 23) gestaltet sind, welche axial gegeneinander versetzt sind, und
**dass** in jedem ringförmigem Hohlraum eine Dichtung (1, 2, 3, 4) aus Elastomer angeordnet ist.

**2.** Dichtungsanordnung nach Anspruch 1,
**dadurch gekennzeichnet, dass** die in einem jeweiligen ringförmigen Hohlraum angeordnete Dichtung (1, 2, 3, 4) eine Ausdehnung in Achsrichtung aufweist, die gegenüber der Ausdehnung quer zur Achsrichtung länger ist.

**3.** Dichtungsanordnung nach Anspruch 1 oder 2,
**dadurch gekennzeichnet, dass** die Dichtungen (1, 2) zweier benachbarter, radial gestaffelter Hohlräume (22, 23) durch einen radial äußeren und einen radial inneren Abschnitt einer Doppeldichtung (6) gebildet werden, die einen die Dichtungsabschnitte überbrückenden Verbindungsabschnitt (5) aufweist.

**4.** Dichtungsanordnung nach einem der Ansprüche 1 bis 3,
**dadurch gekennzeichnet, dass** das erste Verbindungselement (11) wenigstens einen sich axial erstreckenden, ringförmigen Vorsprung (11a) und das zweite Verbindungselement (21) wenigstens einen sich axial erstreckenden, ringförmigen Aufnahmeraum (24) aufweisen.

**5.** Dichtungsanordnung nach Anspruch 4,
**dadurch gekennzeichnet, dass** der ringförmige Vorsprung (11a) mit wenigstens einer ringförmigen Aussparung (12, 13) zur Aufnahme einer jeweiligen Dichtung (1, 2) versehen ist.

**6.** Dichtungsanordnung nach Anspruch 4,
**dadurch gekennzeichnet, dass** der ringförmige Aufnahmeraum (24) durch wenigstens einen sich radial erstreckenden Flansch (25, 26) begrenzt wird.

**7.** Dichtungsanordnung nach einem der Ansprüche 1 bis 6,
**dadurch gekennzeichnet, dass** am ersten Verbindungselement (11) und/oder am zweiten Verbindungselement (21) Einführungsschrägen (28, 29) vorgesehen sind.

**8.** Dichtungsanordnung nach einem der Ansprüche 1 bis 7,
**dadurch gekennzeichnet, dass** die Dichtungen (1, 2, 3, 4) unterschiedliche geometrische Gestaltungen, insbesondere hinsichtlich ihrer Länge, aufweisen.

**9.** Dichtungsanordnung nach einem der Ansprüche 1 bis 8,
**dadurch gekennzeichnet, dass** die Dichtungen (1, 2, 3, 4) unterschiedliche Basiselastomere aufweisen.

**10.** Dichtungsanordnung nach einem der Ansprüche 1 bis 9,
**dadurch gekennzeichnet, dass** die Dichtungen (1, 2, 3, 4) unterschiedliche Shore-Härten aufweisen.

**11.** Dichtungsanordnung nach einem der Ansprüche 1 bis 10,
**dadurch gekennzeichnet, dass** die Dichtungen (1, 2, 3, 4) mit unterschiedlichen Verpressungen in ihren jeweiligen ringförmigen Hohlräumen (12, 13; 22, 23) untergebracht sind.

**12.** Dichtungsanordnung nach einem der Ansprüche 1 bis 11,
**gekennzeichnet durch** eine wenigstens Dreifachanordnung von radial gestaffelten Dichtungen (1, 2, 3, 4).
